# FASCICULE DE BREVET EUROPEEN

(11) **EP 4 077 418 B1**
(45) Date de publication et mention de la délivrance du brevet: **20.08.2025**
(21) Numéro de dépôt: 20845193.0
(22) Date de dépôt: 14.12.2020
(51) Int. Cl.: C08F 210/02, C08F 236/06, C08F 4/52

(54) **SYSTÈME CATALYTIQUE À BASE D'UN MÉTALLOCÈNE ET D'UN DIORGANOMAGNESIEN**
KATALYSATORSYSTEM AUF DER BASIS VON METALLOCEN UND DIORGANOMAGNESIUM
CATALYTIC SYSTEM BASED ON A METALLOCENE AND A DIORGANOMAGNESIUM

(30) Priorité: 17.12.2019 FR 1914624
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: THUILLIEZ, Julien, 63040 CLERMONT-FERRAND Cedex 9 (FR); NGO, Robert, 63040 CLERMONT-FERRAND Cedex 9 (FR); JEAN-BAPTISTE-DIT-DOMINIQUE, François, 63040 CLERMONT-FERRAND Cedex 9 (FR)
(74) Mandataire: M.F.P. Michelin
(86) Numéro de dépôt international: PCT/FR2020/052426
(87) Numéro de publication internationale: WO 2021/123589

(56) Documents cités:
- EP-A1- 2 797 969
- EP-A1- 3 387 067

## Description

Le domaine de la présente invention est celui des systèmes catalytiques qui sont à base d'un métallocène de terre rare et d'un organomagnésien et qui sont destinés à être utilisés dans la préparation de polyoléfines, en particulier de copolymères d'oléfine et de 1,3-diène.

Des systèmes catalytiques à base de métallocènes de terre rare sont décrits par exemple dans les demandes de brevet EP 1 092 731, WO 2004035639, WO 2007054224 et WO 2018224776. Ils permettent la synthèse de polyoléfines, en particulier de copolymères d'oléfine et de 1,3-diène. Ils sont également utilisés dans la préparation de copolymères d'éthylène et de 1,3-butadiène fonctionnel, comme le décrit le document WO 2018224776. Dans ces systèmes catalytiques, le métallocène est activé par un co-catalyseur qui fait partie du système catalytique. A titre de co-catalyseur peut convenir un organomagnésien, un organoaluminique ou un organolithien. Lorsque le co-catalyseur est un organomagnésien, il est typiquement un diorganomagnésien dans lesquels l'atome de magnésium est lié à deux groupes aliphatiques.

La Demanderesse a découvert un nouveau système catalytique à base de métallocène de terre rare utilisant à titre de co-catalyseur un diorganomagnésien qui présente une liaison magnésium-carbone, lequel carbone est un atome de carbone constitutif d'un noyau benzénique spécifique. Le nouveau système catalytique permet d'augmenter le taux de fonction dans la synthèse de polymère fonctionnel. Même selon certains modes de réalisation de l'invention, l'activité catalytique du système catalytique est améliorée.

Ainsi, un premier objet de l'invention est un système catalytique à base au moins :
- d'un métallocène de formule (la) ou (Ib), de préférence (la),
- d'un composé diorganomagnésien à titre de co-catalyseur,

   {P(Cp¹)(Cp²)Y} (Ia)

   Cp³Cp⁴Y (Ib)

   Y désignant un groupe comportant un atome de métal qui est une terre rare,
   Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
   P étant un groupe pontant les deux groupes Cp¹ et Cp², et comprenant un atome de silicium ou de carbone,
   le composé diorganomagnésien étant un composé asymétrique de formule (II)

      R^{B}-Mg-R^{A} (II)
   R^{B} étant différent de R^{A},
   R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
   R^{A} étant un alkyle, un cycloalkyle ou un benzyle, substitué ou non.

L'invention concerne aussi un procédé de préparation d'un polymère qui comprend une étape de polymérisation d'un monomère M choisi dans le groupe des monomères constitués par les diènes conjugués, l'éthylène, les α-monooléfines et leurs mélanges en présence d'un système catalytique conforme à l'invention.

### Description détaillée de l'invention

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Par l'expression « à base de » utilisée pour définir les constituants du système catalytique, on entend le mélange de ces constituants, ou le produit de la réaction d'une partie ou de la totalité de ces constituants entre eux.

Dans la présente demande, on entend par métallocène un complexe organométallique dont le métal, en l'espèce l'atome de terre rare, est lié à deux groupes Cp³ et Cp⁴ ou à une molécule de ligand constitué de deux groupes Cp¹ et Cp² reliés entre eux par un pont P. Ces groupes Cp¹, Cp², Cp³ et Cp⁴, identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique conforme à l'invention répond à la formule (la)

{P(Cp¹)(Cp²)Y} (Ia)

dans laquelle
Y désigne un groupe comportant un atome de métal qui est une terre rare,
Cp¹ et Cp², identiques ou différents, sont choisis dans le groupe constitué par les groupes fluorényles, les groupes cyclopentadiényles et les groupes indényles, les groupes étant substitués ou non substitués,
P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (Ib)

Cp³Cp⁴Y (Ib)

dans laquelle
Y désigne un groupe comportant un atome de métal qui est une terre rare,
Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

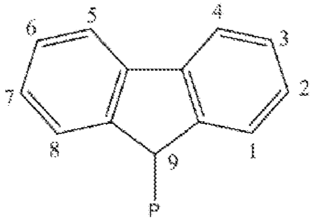

A titre de groupes cyclopentadiényles substitués, on peut citer particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

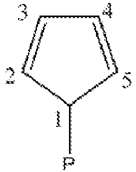

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

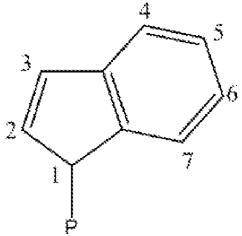

De préférence, le métallocène est de formule (la).

Selon un mode de réalisation préférentiel de l'invention, Cp¹ et Cp² sont identiques et sont choisis dans le groupe constitué par les groupes fluorényles substitués et le groupe fluorényle non substitué de formule C₁₃H₈. Le système catalytique selon ce mode de réalisation préférentiel a la particularité de conduire à des copolymères de butadiène et d'éthylène qui comprennent en plus des unités monomères éthylène et des unités butadiène des unités cycliques 1,2-cyclohexane de formule suivante :

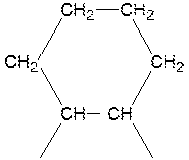

Avantageusement, Cp¹ et Cp² sont identiques et représentent chacun un groupe fluorényle non substitué de formule C₁₃H₈, représenté par le symbole Flu.

Selon un mode de réalisation préférentiel de l'invention, le symbole Y représente le groupe Met-G, avec Met désignant un atome de métal qui est une terre rare et G désignant un groupe comprenant le motif borohydrure BH₄ ou désignant un atome d'halogène choisi dans le groupe constitué par le chlore, le fluor, le brome et l'iode. Avantageusement, G désigne un atome de chlore ou le groupe de formule (III) :

(BH₄)_{(1+y)-}L_{y}-Nₓ (III)

dans laquelle
L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.

Très avantageusement, G désigne le groupe de formule (III).

Comme éther convient tout éther qui a le pouvoir de complexer le métal alcalin, notamment le diéthyléther et le tétrahydrofurane.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z représente avantageusement un atome de silicium, Si.

Le métallocène utile à la synthèse du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (III-3), (III-4) ou (III-5) :

[Me₂Si(Flu)₂Nd(µ-BH₄)₂Li(THF)] (III-1)

[{Me₂SiFlu₂Nd(µ-BH₄)₂Li(THF)}₂] (III-2)

[Me₂SiFlu₂Nd(µ-BH₄)(THF)] (III-3)

[{Me₂SiFlu₂Nd(µ-BH₄)(THF)}₂] (III-4)

[Me₂SiFlu₂Nd(µ-BH₄)] (III-5)

dans laquelle Flu représente le groupe C₁₃H₈.

Un autre constituant de base du système catalytique conforme à l'invention est le co-catalyseur capable d'activer le métallocène vis-à-vis de la polymérisation, notamment dans la réaction d'amorçage de polymérisation. Le co-catalyseur utile aux besoins de l'invention est un composé diorganomagnésien de formule (II), dit asymétrique et dans la présente invention dénommé composé diorganomagnésien asymétrique, puisque les deux groupes représentés par les symboles R^{B} et R^{A} sont différents l'un de l'autre.

R^{B}-Mg-R^{A} (II)

Le groupe représenté par le symbole R^{A} est un alkyle, un cycloalkyle ou un benzyle, substitué ou non. L'alkyle représenté par le symbole R^{A} peut être linéaire ou ramifié, de préférence linéaireet peut contenir 1 à 12 atomes de carbone, de préférence 2 à 10 atomes de carbone, de manière plus préférentielle de 2 à 8 atomes de carbone. Le cycloalkyle représenté par le symbole R^{A} peut contenir 4 à 12 atomes de carbone. De préférence, R^{A} représente un alkyle linéaire ayant de 2 à 8 atomes de carbone. Mieux R^{A} représente n-butyle.

Le groupe représenté par le symbole R^{B} a pour caractéristique essentielle de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Selon un mode de réalisation préférentiel, le composé diorganomagnésien asymétrique répond à la formule (IV) dans laquelle R^{A} est un alkyle, un cycloalkyle ou un benzyle, substitué ou non, R₁ et R₅, identiques ou différents, représentent un méthyle ou éthyle et R₂, R₃ et R₄, identiques ou différents, représentent un atome d'hydrogène ou un alkyle. De préférence, R₁ et R₅ représentent un méthyle. De préférence, R₂ et R₄ représentent un atome hydrogène.

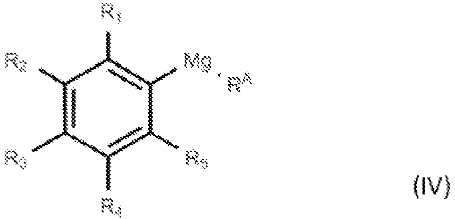

Selon une variante préférentielle, R₁, R₃ et R₅ sont identiques. Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Le composé diorganomagnésien asymétrique utile à l'invention peut être préparé par un procédé qui comprend les étapes suivantes :
- la mise en contact d'un composé organométallique de formule R^{A}M avec un organomagnésien de formule R^{B}-Mg-X,
- la réaction du composé organométallique de formule R^{A}M et de l'organomagnésien de formule R^{B}-Mg-X,
M représentant un atome de lithium, de sodium ou de potassium, X représentant un groupe partant, R^{B} et R^{A} étant tels que définis précédemment.

On entend par groupe partant un groupe partant tel que défini par IUPAC. A titre de groupe partant, on peut citer tout particulièrement les atomes d'halogène choisi dans le groupe constitué par le chlore, le fluor, le brome et l'iode. X est préférentiellement un atome d'halogène. X est plus préférentiellement un atome de brome ou un atome de chlore. X est encore plus préférentiellement un atome de brome.

De préférence, M représente un atome de lithium, auquel cas l'organométallique de formule R^{A}M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C.

La mise en contact du composé organométallique de formule R^{A}M avec l'organomagnésien de formule R^{B}-Mg-X se fait préférentiellement par l'ajout d'une solution du composé organométallique R^{A}M à une solution de l'organomagnésien R^{B}-Mg-X. La solution du composé organométallique R^{A}M est généralement une solution dans un solvant hydrocarboné, de préférence n-hexane, cyclohexane ou méthylcyclohexane, la solution de l'organomagnésien R^{B}-Mg-X est généralement une solution dans un éther, de préférence le diéthyléther, le tétrahydrofurane ou le méthyltétrahydrofurane. De préférence, les concentrations respectives des solutions du composé organométallique et de l'organomagnésien R^{A}M et R^{B}-Mg-X sont respectivement de 0.01 à 1 mol/l et de 1 à 5 mol/l. De manière plus préférentielle, les concentrations respectives des solutions du composé organométallique et de l'organomagnésien R^{A}M et R^{B}-Mg-X sont respectivement de 0.05 à 0.2 mol/l et de 2 à 3 mol/l.

Comme toute synthèse faite en présence de composés organométalliques, la mise en contact et la réaction ont lieu dans des conditions anhydres sous atmosphère inerte Typiquement, les solvants et les solutions sont utilisés sous azote ou argon anhydre. Les différentes étapes du procédé sont conduites généralement sous agitation.

Une fois le diorganomagnésien asymétrique formé, il est récupéré généralement en solution après filtration conduite sous atmosphère inerte et anhydre. La solution de diorganomagnésien asymétrique est typiquement stockée avant son utilisation dans des récipients hermétiques, par exemple des bouteilles capsulées, à une température comprise entre -25°C et 23°C.

Comme tout composé organomagnésien, le composé diorganomagnésien R^{B}-Mg-R^{A} utile aux besoins de l'invention peut se présenter sous la forme d'une entité monomère (R^{B}-Mg-R^{A})₁ ou sous la forme d'une entité polymère (R^{B}-Mg-R^{A})ₚ, p étant un nombre entier supérieur à 1, notamment dimère (R^{B}-Mg-R^{A})₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le système catalytique conforme à l'invention peut être préparé de façon traditionnelle par un procédé analogue à celui décrit dans la demande de brevet WO 2007054224 ou WO 2007054223. Par exemple on fait réagir dans un solvant hydrocarboné le diorganomagnésien asymétrique et le métallocène typiquement à une température allant de 20 à 80°C pendant une durée comprise entre 5 et 60 minutes. Les quantités de co-catalyseur et métallocène mises en réaction sont telles que le rapport entre le nombre de mole de Mg du co-catalyseur et le nombre de mole de métal de terre rare du métallocène va de préférence de 1 à 100, de manière plus préférentielle de 1 à moins de 10. La plage de valeurs allant de 1 à moins de 10 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Alternativement, le système catalytique conforme à l'invention peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, du diorganomagnésien asymétrique et du monomère de préformation. Par exemple on fait réagir dans un solvant hydrocarboné le diorganomagnésien asymétrique et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule CH₂=CR-CH=CH₂, le symbole R représentant une chaîne hydrocarbonée ayant 3 à 20 atomes de carbone, en particulier le myrcène ou le β-farnésène. Le système catalytique ainsi obtenu peut être utilisé de suite dans le procédé conforme à l'invention ou être stocké sous atmosphère inerte, notamment à une température allant de - 20°C à la température ambiante (23°C), avant son utilisation dans la synthèse de polymères.

Comme toute synthèse faite en présence de composé organométallique, la synthèse du métallocène, la synthèse du diorganomagnésien asymétrique et la synthèse du système catalytique ont lieu dans des conditions anhydres sous atmosphère inerte. Typiquement, les réactions sont conduites à partir de solvants et de composés anhydres sous azote ou argon anhydre.

Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. Selon l'un quelconque des modes de réalisation de l'invention, le système catalytique comprend de préférence un solvant hydrocarboné. Lorsque le système catalytique est en solution, sa concentration est définie par la teneur en métal de métallocène dans la solution. La concentration en métal de métallocène a une valeur allant préférentiellement de 0.0001 à 0.2 mol/l, plus préférentiellement de 0.001 à 0.03 mol/l.

Le système catalytique selon l'invention est destiné à être utilisé dans un procédé de synthèse de polymères, notamment d'élastomères utilisables dans des compositions de caoutchouc, par exemple pour pneumatique. Lorsque le procédé comprend une étape de fonctionnalisation des polymères, l'utilisation combinée du métallocène et du composé diorganomagnésien asymétrique tels que décrits selon les modes de réalisation de l'invention permet d'augmenter le taux de chaînes polymères fonctionnelles. Même l'activité catalytique dans la synthèse de polymères peut être aussi améliorée, notamment lorsque les substituants du noyau benzénique en ortho du magnésium dans le composé diorganomagnésien asymétrique sont tous les deux différents d'un groupe isopropyle.

Les polymères sont typiquement des copolymères de diènes et d'oléfines. A titre d'oléfines, on peut citer particulièrement l'éthylène et les α-oléfines, notamment celles ayant 3 à 18 atomes de carbone. A titre de diènes conviennent tout particulièrement les 1,3-diènes, plus particulièrement les 1,3-diènes ayant 4 à 24 atomes de carbone tel que le 1,3-butadiène, l'isoprène, le myrcène et le β-farnésène et leurs mélanges.

Le procédé de préparation d'un polymère, autre objet de l'invention, comprend une étape de polymérisation d'un monomère M choisi dans le groupe des monomères constitués par les diènes conjugués, l'éthylène, les α-monooléfines et leurs mélanges en présence d'un système catalytique conforme à l'invention. De préférence, le monomère M est un mélange d'un 1,3-diène et d'éthylène. A titre de diènes conviennent tout particulièrement les 1,3-diènes, plus particulièrement les 1,3-diènes ayant 4 à 24 atomes de carbone tel que le 1,3-butadiène, l'isoprène, le myrcène, le β-farnésène et leurs mélanges. Selon la microstructure et la longueur des chaînes polymères préparées par le procédé conforme à l'invention, le polymère peut être un élastomère.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le monomère M peut être introduit dans le réacteur contenant le solvant de polymérisation et le système catalytique ou inversement le système catalytique peut être introduit dans le réacteur contenant le solvant de polymérisation et le monomère M. Le monomère M et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. Elle est ajustée selon le monomère à polymériser. De préférence, la copolymérisation est conduite à pression constante d'éthylène.

Au cours de la polymérisation de l'éthylène et des 1,3-diènes dans un réacteur de polymérisation, un ajout continu d'éthylène et des 1,3-diènes peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation ou par ajout d'un alcool. Le polymère peut être récupéré selon les techniques classiques connues de l'homme du métier comme par exemple par précipitation, par évaporation du solvant sous pression réduite ou par stripping à la vapeur d'eau.

Alternativement au lieu d'ajouter un alcool, on peut ajouter un agent de modification ou agent de fonctionnalisation, auquel cas le procédé comprend après l'étape de polymérisation l'ajout d'un agent de modification pour fonctionnaliser le polymère. Il est alors récupéré un polymère portant une fonction telle qu'une fonction amine, une fonction silanol ou une fonction alcoxysilane. Selon un mode de réalisation particulier de l'invention, le polymère porte une fonction amine, alcoxysilane ou silanol.

Selon une première variante dans laquelle la fonction portée par le polymère est une fonction amine, l'agent de modification est de préférence un composé de formule (V),

Si(Fc¹)_{3-g} (Rc² )_{g}(Rca) (V)

les symboles Fc¹, identiques ou différents, représentant un groupe alcoxy,
les symboles Rc², identiques ou différents, représentant un atome d'hydrogène ou une chaîne hydrocarbonée,
le symbole Rca représentant une chaîne hydrocarbonée substituée par une fonction amine, g étant un nombre entier allant de 0 à 1.

Le groupe alcoxy représenté par le symbole Fc¹ dans la formule (V) est de préférence méthoxy ou éthoxy.

La fonction amine désignée dans le symbole Rca dans la formule (V), à savoir la fonction amine de l'agent de modification est une fonction amine primaire protégée, une fonction amine secondaire protégée ou une fonction amine tertiaire. Comme groupes protecteurs des fonctions amine primaire et amine secondaire, on peut citer les groupes silyles, par exemple les groupes triméthylsilyle et terbutyldiméthylsilyle. De préférence, la fonction amine de l'agent de modification est une fonction amine tertiaire. Avantageusement, la fonction amine de l'agent de modification est une amine tertiaire de formule -N(R_{B})₂ dans laquelle chaque R^{B} représente un alkyle, préférentiellement un méthyle ou un éthyle.

A titre d'agent de modification pour préparer un polymère portant une fonction amine selon la première variante, on peut citer les composés (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, (N,N-diméthylaminopropyl)triméthoxysilane, (N,N-diméthylaminopropyl)triéthoxysilane et (N-(3-triméthoxysilyl)propyl)-N-(triméthylsilyl)silanamine, (N-(3-triéthoxysilyl)propyl)-N-(triméthyl-silyl)silanamine, de préférence (N,N-diméthyl-3-aminopropyl)méthyldiméthoxysilane, (N,N-diméthyl-3-aminopropyl)éthyldiméthoxysilane, (N,N-diméthylaminopropyl)triméthoxysilane et (N-(3-triméthoxysilyl)-propyl)-N-(triméthylsilyl)silanamine, de manière plus préférentielle (N,N-diméthylaminopropyl)triméthoxysilane et (N-(3-triméthoxysilyl)propyl)-N-(triméthylsilyl)-silanamine.

Selon une deuxième variante dans laquelle la fonction portée par le polymère est une fonction silanol ou alcoxysilane, l'agent de modification est de préférence un composé de formule (VI),

Si(Fc¹)_{4-g} (Rc²)_{g} (VI)

les symboles Fc¹, identiques ou différents, représentant un groupe alcoxy ou un atome d'halogène,
les symboles Rc², identiques ou différents, représentant un atome d'hydrogène, une chaîne hydrocarbonée ou une chaîne hydrocarbonée substituée par une fonction chimique Fc²,
g étant un nombre entier allant de 0 à 2.

Lorsque le symbole Fc¹ représente un groupe alcoxy dans la formule (VI), le groupe alcoxy est de préférence méthoxy ou éthoxy. Lorsque le symbole Fc¹ représente un atome d'halogène dans la formule (VI), l'atome d'halogène est de préférence le chlore.

Parmi les chaînes hydrocarbonées représentée par les symboles Rc² dans les formules (VI), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc² qui sont représentée par les symboles Rc² dans les formules (VI), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique Fc², autrement dit, une valence de la chaîne alcanediyle pour la fonction Fc², l'autre valence pour l'atome de silicium de la fonction méthoxysilane.

Dans les formules (VI), on entend par fonction chimique un groupe qui est différent d'un groupe hydrocarboné saturé et qui peut participer à des réactions chimiques. L'homme du métier comprend que la fonction chimique Fc² dans la formule (VI) est un groupe chimiquement inerte vis-à-vis des espèces chimiques présentes dans le milieu de polymérisation. La fonction chimique Fc² dans la formule (VI) peut être sous une forme protégée, comme par exemple dans le cas de la fonction amine primaire, amine secondaire ou thiol. A titre de fonction chimique Fc², peuvent être citées les fonctions éther, thioéther, amine primaire protégée, amine secondaire protégée, amine tertiaire, thiol protégé, silyle. De préférence, la fonction chimique Fc² dans la formule (VI) est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

A titre d'agent de modification pour préparer un polymère portant une fonction silanol ou alcoxysilane selon la deuxième variante, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

Qu'il s'agisse de la première ou de la deuxième variante, l'agent de modification est ajouté typiquement au milieu de polymérisation. Il est typiquement ajouté au milieu de polymérisation à un taux de conversion des monomères choisi par l'homme du métier selon la macrostructure souhaitée du polymère. L'étape de polymérisation étant conduite généralement sous pression d'éthylène, un dégazage du réacteur de polymérisation peut être réalisé avant l'ajout de l'agent de modification. L'agent de modification est ajouté dans des conditions inertes et anhydres au milieu de polymérisation, maintenu à la température de polymérisation. Il est typiquement utilisé de 0.25 à 10 moles d'agent de modification pour 1 mole de co-catalyseur, de préférence de 2 à 4 moles d'agent de modification pour 1 mole de co-catalyseur. L'agent de modification est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Lorsque l'agent de modification porte une fonction protégée telle que décrite précédemment, l'étape de fonctionnalisation du polymère peut être suivie d'une réaction d'hydrolyse pour former un polymère portant une fonction déprotégée, comme une amine primaire, une amine secondaire ou une fonction thiol.

Une réaction d'hydrolyse peut également suivre la réaction de fonctionnalisation du polymère lorsque la réaction de fonctionnalisation conduit à la formation d'un polymère portant une fonction alcoxysilane. L'hydrolyse du polymère portant une fonction alcoxysilane conduit à la préparation d'un polymère portant une fonction silanol.

Lorsque le procédé comprend une étape de fonctionnalisation, l'agent de modification est préférentiellement un alcoxysilane, pouvant porter une autre fonction, telle qu'une fonction amine.

En résumé, l'invention est mise en œuvre avantageusement selon l'un quelconque des modes de réalisation suivants 1 à 38 :
Mode 1 : Système catalytique à base au moins :
   d'un métallocène de formule (la) ou (Ib),
   d'un composé diorganomagnésien à titre de co-catalyseur,

      {P(Cp¹)(Cp²)Y} (Ia)

      Cp³Cp⁴Y (Ib)
   Y désignant un groupe comportant un atome de métal qui est une terre rare,
   Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
   P étant un groupe pontant les deux groupes Cp¹ et Cp², et comprenant un atome de silicium ou de carbone,
   le composé diorganomagnésien étant un composé asymétrique de formule (II)

      R^{B}-Mg-R^{A} (II)
   R^{B} étant différent de R^{A},
   R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
   R^{A} étant un alkyle, un cycloalkyle ou un benzyle, substitué ou non.
Mode 2 : Système catalytique selon le mode 1 dans lequel le métallocène est de formule (la).
Mode 3 : Système catalytique selon l'un quelconque des modes 1 à 2 dans lequel Cp¹ et Cp² sont identiques et sont choisis dans le groupe constitué par les groupes fluorényles substitués et le groupe fluorényle non substitué de formule C₁₃H₈.
Mode 4 : Système catalytique selon l'un quelconque des modes 1 à 3 dans lequel Cp¹ et Cp² représentent chacun un groupe fluorényle non substitué de formule C₁₃H₈.
Mode 5 : Système catalytique selon l'un quelconque des modes 1 à 4, dans lequel le symbole Y représente le groupe Met-G, avec Met désignant un atome de métal qui est une terre rare et G désignant un groupe comprenant le motif borohydrure BH₄ ou désignant un atome d'halogène choisi dans le groupe constitué par le chlore, le fluor, le brome et l'iode.
Mode 6 : Système catalytique selon le mode 5 dans lequel G désigne un atome de chlore ou le groupe de formule (III)

   (BH₄)_{(1+y)-}L_{y}-Nₓ (III)

   dans laquelle
   L représente un métal alcalin choisi dans le groupe constitué par le lithium, le sodium et le potassium,
   N représente une molécule d'un éther, de préférence diéthyléther ou tétrahydrofurane,
   x, nombre entier ou non, est égal ou supérieur à 0,
   y, nombre entier, est égal ou supérieur à 0.
Mode 7 : Système catalytique selon le mode 6 dans lequel G désigne le groupe de formule (III).
Mode 8 : Système catalytique selon l'un quelconque des modes 1 à 7 dans lequel la terre rare est un lanthanide dont le numéro atomique varie de 57 à 71.
Mode 9 : Système catalytique selon l'un quelconque des modes 1 à 8 dans lequel la terre rare est le néodyme.
Mode 10 : Système catalytique selon l'un quelconque des modes 1 à 9 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone.
Mode 11 : Système catalytique selon l'un quelconque des modes 1 à 10 dans lequel le pont P répond à la formule ZR¹R², Z représentant un atome de silicium ou de carbone, R¹ et R², identiques ou différents, représentant chacun un méthyle.
Mode 12 : Système catalytique selon l'un quelconque des modes 9 à 11 dans lequel Z représente un atome de silicium.
Mode 13 : Système catalytique selon l'un quelconque des modes 1 à 12 dans lequel le métallocène est de formule (III-1), (III-2), (III-3), (III-4) ou (III-5) :

   [Me₂Si(Flu)₂Nd(µ-BH₄)₂Li(THF)] (III-1)

   [{Me₂SiFlu₂Nd(µ-BH₄)₂Li(THF)}₂] (III-2)

   [Me₂SiFlu₂Nd(µ-BH₄)(THF)] (III-3)

   [{Me₂SiFlu₂Nd(µ-BH₄)(THF)}₂] (III-4)

   [Me₂SiFlu₂Nd(µ-BH₄)] (III-5)

   Flu représentant le groupe C₁₃H₈.
Mode 14 : Système catalytique selon l'un quelconque des modes 1 à 13 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.
Mode 15 : Système catalytique selon l'un quelconque des modes 1 à 14 dans lequel les atomes de carbone du noyau benzénique de R^{B} en ortho du magnésium sont substitués par un méthyle ou un éthyle.
Mode 16 : Système catalytique selon l'un quelconque des modes 1 à 15 dans lequel les atomes de carbone du noyau benzénique de R^{B} en ortho du magnésium sont substitués par un méthyle.
Mode 17 : Système catalytique selon l'un quelconque des modes 1 à 16 dans lequel le composé diorganomagnésien est de formule (IV) 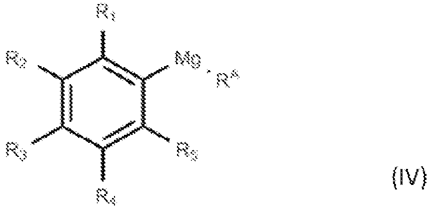
   R₁ et R₅, identiques ou différents, représentent un méthyle ou un éthyle, de préférence un méthyle,
   R², R₃ et R₄, identiques ou différents, étant un atome d'hydrogène ou alkyle,
   R^{A} étant un alkyle, un cycloalkyle ou un benzyle, substitué ou non.
Mode 18 : Système catalytique selon le mode 17 dans lequel R₁ et R₅ représentent un méthyle.
Mode 19 : Système catalytique selon l'un quelconque des modes 17 à 18 dans lequel R₂ et R₄ représentent un atome hydrogène.
Mode 20 : Système catalytique selon l'un quelconque des modes 17 à 19 dans lequel R₃ est identique à R₁ et à R₅.
Mode 21 : Système catalytique selon l'un quelconque des modes 1 à 20 dans lequel R^{A} représente un alkyle ayant 1 à 12 atomes de carbone.
Mode 22 : Système catalytique selon l'un quelconque des modes 1 à 21 dans lequel R^{A} représente un alkyle ayant de 2 à 10 atomes de carbone.
Mode 23 : Système catalytique selon l'un quelconque des modes 1 à 22 dans lequel R^{A} représente un alkyle ayant de 2 à 8 atomes de carbone.
Mode 24 : Système catalytique selon l'un quelconque des modes 1 à 23 dans lequel R^{A} représente un alkyle linéaire.
Mode 25 : Système catalytique selon l'un quelconque des modes 1 à 24 dans lequel R^{A} représente un n-butyle.
Mode 26 : Système catalytique selon l'un quelconque des modes 1 à 25 dans lequel le rapport entre le nombre de mole de Mg du co-catalyseur et le nombre de mole de métal de terre rare du métallocène va de 1 à 100.
Mode 27 : Système catalytique selon l'un quelconque des modes 1 à 26 dans lequel le rapport entre le nombre de mole de Mg du co-catalyseur et le nombre de mole de métal de terre rare du métallocène va de 1 à moins de 10.
Mode 28 : Système catalytique selon l'un quelconque des modes 1 à 27, lequel système catalytique comprend un solvant hydrocarboné.
Mode 29 : Système catalytique selon l'un quelconque des modes 1 à 28, lequel système catalytique est en solution dans un solvant hydrocarboné.
Mode 30 : Système catalytique selon l'un quelconque des modes 28 à 29 dans lequel le solvant hydrocarboné est aromatique ou aliphatique.
Mode 31 : Système catalytique selon l'un quelconque des modes 28 à 30 dans lequel le solvant hydrocarboné est aliphatique.
Mode 32 : Système catalytique selon l'un quelconque des modes 28 à 31 dans lequel le solvant hydrocarboné est le méthylcyclohexane.
Mode 33 : Système catalytique selon l'un quelconque des modes 28 à 32 dans lequel la concentration molaire en métal du métallocène dans le système catalytique a une valeur allant de 0.0001 à 0.2 mol/l.
Mode 34 : Système catalytique selon l'un quelconque des modes 28 à 33 dans lequel la concentration molaire en métal du métallocène dans le système catalytique a une valeur allant de 0.001 à 0.03 mol/l.
Mode 35 : Procédé de préparation d'un polymère qui comprend une étape de polymérisation d'un monomère M choisi dans le groupe des monomères constitués par les diènes conjugués, l'éthylène, les α-monooléfines et leurs mélanges en présence d'un système catalytique défini à l'un quelconque des modes 1 à 34.
Mode 36 : Procédé selon le mode 35 dans lequel le monomère M est un mélange d'un 1,3-diène et d'éthylène, le 1,3-diène étant de préférence le 1,3-butadiène, l'isoprène, le myrcène, le β-farnésène ou leurs mélanges.
Mode 37 : Procédé selon l'un quelconque des modes 35 à 36, lequel procédé comprend après l'étape de polymérisation l'ajout d'un agent de modification pour fonctionnaliser le polymère.
Mode 38 : Procédé selon le mode 37 dans lequel l'agent de modification est un alcoxysilane.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples de réalisation de l'invention

### Matières premières :

Le bromure de phényl magnésium en solution dans le diéthyléther à 3 mol/L, le bromure de mésityl magnésium en solution dans le diéthyléther à 1 mol/L, le bromure de triisopropylphénylmagnésium en solution dans le tétrahydrofurane à 0.5 mol/L sont obtenus chez Sigma-Aldrich et utilisés sans purification préalable.

### Synthèse des diorganomagnésiens :

### Caractérisation des diorganomagnésiens synthétisés :

La structure des diorganomagnésiens est caractérisée par résonance magnétique nucléaire RMN 1D ¹H, ¹H-¹³C HSQC ((Heteronuclear Single Quantum Coherence), ¹H-¹³C HMBC (Heteronuclear Multiple-Bond Correlation). Le diorganomagnésien est analysé avec son solvant de synthèse et le THF-D₄ est ajouté à la solution pour réaliser le « lock » de la RMN.

### Mode opératoire des synthèses des diorganomagnésiens :

### Synthèse de butylphénylmagnésium (PhMgBu) : exemple non conforme à l'invention

1.2 mL de phényl-Mg-Br à 3 mol/L dans le diéthylether est introduit dans une bouteille steinie préalablement barbotée. 57 mL de n-BuLi à 0.06 mol/L dans le méthylcyclhexane (MCH), sont ensuite ajoutés à 23°C. Un précipité blanc se forme et la bouteille est laissée sous agitation une nuit à 23°C, sur un dispositif qui secoue la bouteille, dit secoueuse. Le précipité est filtré à l'aide d'un filtre à 0.45 µm lors du transfert de la phase liquide vers une autre bouteille steinie préalablement barbotée. La formation et la structure du diorganomagnésien symétrique sont confirmées par les analyses RMN, notamment par un signal de déplacement chimique de 6.55 à 6.6 ppm (proton du noyau benzénique) et un signal de déplacement chimique de -1 à -0.45 ppm (protons du butyle).

### Synthèse de butylmésitylmagnésium (MesMgBu) :

3.6 mL de mésityl-Mg-Br à 1 mol/L dans le diéthylether sont introduits dans une bouteille steinie préalablement barbotée. 57 mL de n-BuLi à 0.06 mol/L dans le MCH, sont ensuite ajoutés à 23°C. Un précipité blanc se forme et la bouteille est laissée sous agitation une nuit à 23°C sur une secoueuse. Le précipité est filtré à l'aide d'un filtre à 0.45 µm lors du transfert de la phase liquide vers une autre bouteille steinie préalablement barbotée. La formation et la structure du diorganomagnésien symétrique sont confirmées par les analyses RMN, notamment par un signal de déplacement chimique à 6.5 ppm (proton du noyau benzénique en méta du magnésium) et un signal de déplacement chimique à -0.5 ppm (proton en alpha du Mg sur la chaîne nbutyle).

### Synthèse de butyltriisopropylphenylmagnésium ((iPr)₃PhMgBu) :

3 mL de triisopropylphenyl-Mg-Br à 0.5mol/L dans le tétrahydrofuranne (THF) sont introduit sdans une bouteille steinie préalablement barbotée. 25 mL de n-BuLi à 0.06mol/L dans le MCH sont ensuite ajoutés. Un léger précipité blanc se forme et la bouteille est laissée à température ambiante sur une secoueuse, une nuit.

Le composé est utilisé directement en polymérisation.

Copolymérisation de l'éthylène et du 1,3-butadiène :
Le métallocène [{Me₂SiFlu₂Nd(µ-BH₄)₂Li(THF) }]₂ est préparé selon le mode opératoire décrit dans la demande de brevet WO 2007054224.

Le butyloctylmagnésium BOMAG (20% dans l'heptane, à 0.88 mol L⁻¹) provient de Chemtura et est stocké dans un tube de Schlenk sous atmosphère inerte.

L'éthylène, de qualité N35, provient de la société Air Liquide et est utilisé sans purification préalable.

Le 1,3-butadiène est purifié sur gardes d'alumine.

Le (N,N-diméthyl-3-aminopropyl)méthyldiméthoxysilane est obtenu chez ABCR et utilisé après dégazage.

Le solvant méthylcyclohexane (MCH) provenant de chez BioSolve est séché et purifié sur colonne d'alumine dans une fontaine à solvant provenant de chez mBraun et utilisée en atmosphère inerte.

Toutes les réactions sont effectuées en atmosphère inerte.

Les systèmes catalytiques sont préparés selon le procédé divulgué dans la demande de brevet WO 2007054224 et décrit ci-après. Toutes les polymérisations et les réactions de fonctionnalisation de copolymères de l'éthylène et du 1,3-butadiène sont effectuées dans un réacteur à cuve jetable en verre de 500 mL (flacons Schott) muni d'une pale d'agitation en acier inoxydable. Le contrôle de la température est assuré grâce à un bain d'huile thermostaté connecté à une double enveloppe en polycarbonate. Ce réacteur possède toutes les entrées ou sorties nécessaires aux manipulations.

Dans un réacteur en verre de 500 mL contenant du MCH, on ajoute le co-catalyseur, puis le métallocène. La quantité de co-catalyseur introduite est de 40 mg, le ratio entre le nombre de mole de Mg du co-catalyseur et le nombre de mole de Nd du métallocène est de 4.5. La durée d'activation est de 10 minutes, la température de réaction est de 20 °C.

La polymérisation est conduite à 80°C et à une pression initiale de 4 bars absolue dans le réacteur en verre de 500 ml contenant 300 ml de solvant de polymérisation, le méthylcyclohexane, le système catalytique. Le 1,3-butadiène et l'éthylène sont introduits sous la forme d'un mélange gazeux contenant 20% molaire de 1,3-butadiène. La réaction de polymérisation est stoppée par refroidissement et dégazage du réacteur. Le copolymère est récupéré par précipitation dans du méthanol, puis séché. La masse pesée permet de déterminer l'activité catalytique moyenne du système catalytique exprimée en kilogramme de copolymère synthétisé par mole de métal néodyme et par heure (kg/mol.h).

Sauf indication contraire, la polymérisation est stoppée par dégazage du réacteur et ajout de l'agent de fonctionnalisation à 80°C après formation de 12 à 13 g de polymère. Les co-catalyseurs utilisés sont le butyloctylmagnésium (BOMAG), le phenyl-Mg-butyl, le mesityl-Mg-butyl, le triisopropylphenyl-Mg-butyl. Pour chacun des co-catalyseurs, l'activité catalytique du système catalytique est déterminée. Les résultats figurent dans le tableau 1. Les polymères synthétisés sont caractérisés par RMN du proton et du carbone 13 et par chromatographie à exclusion de taille (SEC). Les résultats figurent dans le tableau 2 (microstructure) et le tableau 3 (macrostructure).

### Mode opératoire de fonctionnalisation :

Lorsque la conversion en monomères souhaitée est atteinte, le contenu du réacteur est dégazé puis 2 équivalents (par rapport au magnésium) de l'agent de modification, le (N,N-diméthyl-3-aminopropyl)méthyldiméthoxysilane, sont introduits sous atmosphère inerte par surpression. Le milieu réactionnel est agité pendant 60 minutes à 80°C. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé avec 0.2 pce de N-(1,3-diméthylbutyl)-N'-phényl-p-phénylènediamine et 0.6 pce de 2,2'-méthylènebis(6-tert-butyl-4-méthylphenol) puis séché à 60 °C sous vide jusqu'à masse constante. Il est ensuite analysé par SEC (THF), RMN ¹H, ¹³C, ²⁹Si. Les résultats figurent dans le tableau 4.

### Résonance magnétique nucléaire (RMN) :

Tous les produits de fonctionnalisation des copolymères de l'éthylène et du 1,3-butadiène sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBIz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. Les expériences bidimensionnelles ¹H/¹³C et ¹H/²⁹Si sont utilisées dans le but de déterminer la structure des polymères fonctionnels. La détermination de la microstructure des copolymères est définie dans la littérature, selon l'article de Llauro et al., Macromolecules 2001, 34, 6304-6311.

La structure chimique finale de chaque polymère fonctionnel est identifiée par RMN (¹H, ¹³C et ²⁹Si).

### Chromatographie à exclusion de taille (SEC) :

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur " Waters 717 " et d'une pompe " Waters 515 HPLC " à un débit de 1 ml.min⁻¹ dans une série de colonnes " Polymer Laboratories ". Cette série de colonnes, placée dans une enceinte thermostatée à 45°C, est composée de :
   - 1 précolonne PL Gel 5 µm,
   - 2 colonnes PL Gel 5 µm Mixte C,
   - 1 colonne PL Gel 5 µm-500 Å.

   On a réalisé la détection à l'aide d'un réfractomètre " Waters 410 ".
   On a déterminé les masses molaires par calibration universelle en utilisant des étalons de polystyrène certifiés par " Polymer Laboratories " et une double détection avec réfractomètre et couplage au viscosimètre.
   Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé, également appelé dispersité (Ip = Mw/Mn).
b) Pour les copolymères insolubles à température ambiante dans le tétrahydrofurane, les masses molaires ont été déterminées dans le 1,2,4- trichlorobenzène. On les a tout d'abord dissous à chaud (4 h 00 à 150°C), puis on les a injectés à 150°C avec un débit de 1 ml.min⁻¹ dans un chromatographe " Waters Alliance GPCV 2000 " équipé de trois colonnes " Styragel " (2 colonnes " HT6E " et 1 colonne " HT2 ").

On a effectué la détection à l'aide d'un réfractomètre " Waters ".

On a déterminé les masses molaires par calibration relative en utilisant des étalons polystyrène certifiés par " Polymer Laboratories ".

**Tableau 1**

| **Exemple** | **Co-catalyseur** | **Activité (Kg/mol.h)** |
|---|---|---|
| **1** | BOMAG | 125 |
| **2** | PhMgBu | 71 |
| **3** | MesMgBu | 143 |
| **4** | (iPr)3PhMgBu | 32 |

**Tableau 2**

| **Co-catalyseur** | **% Eth dans EBR (1)** | **% PB1,2/EBR (2)** | **% PB1,4/EBR (3)** | **% cycles/EBR (4)** |
|---|---|---|---|---|
| **BOMAG** | 80 | 4 | 4-5 | 11-12 |
| **PhMgBu** | 79 | 5 | 4 | 11 |
| **MesMgBu** | 76-78 | 5-6 | 5 | 11-13 |
| **(iPr)3PhMgBu** | 77 | 6 | 5 | 11 |

| | | | | |
|---|---|---|---|---|
| (1) taux molaire de motif (CH2-CH2) dans le copolymère (2) taux molaire de motif (CH2-C(CH=CH2)) dans le copolymère (3) taux molaire de motif (CH2-CH=CH-CH2) dans le copolymère (4) taux molaire de motif 1,2-cyclohexanediyle dans le copolymère. | | | | |

**Tableau 3**

| **Exemple** | **Co-catalyseur** | **nMg (µmol) (1)** | **mpolymère (g) (2)** | **Ip (3)** |
|---|---|---|---|---|
| **1** | BOMAG | 278 | 11.5 | 1.40 |
| **2** | PhMgBu | 282 | 13.4 | 1.41 |
| **3** | MesMgBu | 275 | 13.1 | 1.30 |
| **4** | (iPr)3PhMgBu | 293 | 2.2 | 1.51 |

| | | | | |
|---|---|---|---|---|
| (1) nombre de moles de magnésium introduit dans le réacteur (2) masse de copolymère formé (3) indice de polymolécularité du copolymère. | | | | |

**Tableau 4**

| **Exemple** | **Co-catalyseur** | **Taux de fonction** |
|---|---|---|
| **1** | BOMAG | 45% |
| **2** | PhMgBu | 46% |
| **3** | MesMgBu | 57% |
| **4** | (iPr)3PhMgBu | 60% |

Les résultats consignés dans le tableau 4 montrent que les systèmes catalytiques selon l'invention (exemples 3 et 4) qui se distinguent de ceux de l'état de la technique par la présence dans le co-catalyseur d'un noyau benzénique disubstitué en ortho du magnésium permettent d'améliorer le taux de chaînes polymères fonctionnelles dans la réaction de fonctionnalisation de copolymère d'éthylène et de 1,3-diène. Il est obtenu un gain de 11% dans le rendement de la réaction de fonctionnalisation. Ces résultats sont obtenus alors même que la microstructure et la macrostructure (Ip) des polymères synthétisés dans les exemples 1 à 4 sont quasi identiques (tableaux 2 et 3).

Une amélioration du procédé de synthèse des polymères peut être aussi observée, lorsque les substituants du noyau benzénique en ortho du magnésium dans le composé diorganomagnésien asymétrique sont tous les deux différents d'un groupe isopropyle (tableau 1). En effet, l'activité catalytique dans l'exemple 3 est la plus forte : un gain d'au moins 10% est obtenu par rapport aux autres exemples.

En résumé, l'utilisation combinée du métallocène et du composé diorganomagnésien asymétrique tels que décrits selon les modes de réalisation de l'invention permet d'augmenter le taux de chaînes polymères fonctionnelles. Même l'activité catalytique dans la synthèse de polymères peut être aussi améliorée lorsque les substituants du noyau benzénique en ortho du magnésium dans le composé diorganomagnésien asymétrique sont tous les deux différents d'un groupe isopropyle.

## Revendications

1. Système catalytique à base au moins :
d'un métallocène de formule (la) ou (Ib), de préférence (la),
d'un composé diorganomagnésien à titre de co-catalyseur,
{P(Cp¹)(Cp²)Y} (Ia)
Cp³Cp⁴Y (Ib)
Y désignant un groupe comportant un atome de métal qui est une terre rare, Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
le composé diorganomagnésien étant un composé asymétrique de formule (II)
R^{B}-Mg-R^{A} (II)
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou
un isopropyle ,
R^{A} étant un alkyle, un cycloalkyle ou un benzyle, substitué ou non.

2. Système catalytique selon la revendication 1 dans lequel Cp¹ et Cp² sont identiques et sont choisis dans le groupe constitué par les groupes fluorényles substitués et le groupe fluorényle non substitué de formule C₁₃H₈, de préférence représentent chacun un groupe fluorényle non substitué de formule C₁₃H₈.

3. Système catalytique selon l'une quelconque des revendications 1 à 2, dans lequel le symbole Y représente le groupe Met-G, avec Met désignant un atome de métal qui est une terre rare et G désignant un groupe comprenant le motif borohydrure BH₄ ou désignant un atome d'halogène choisi dans le groupe constitué par le chlore, le fluor, le brome et l'iode.

4. Système catalytique selon la revendication 3 dans lequel G désigne un atome de chlore ou le groupe de formule (III)
(BH₄)_{(1+y)-}L_{y}-Nₓ (III)
dans laquelle
L représente un métal alcalin choisi dans le groupe constitué par le lithium, le sodium et le potassium,
N représente une molécule d'un éther, de préférence diéthyléther ou tétrahydrofurane, x, nombre entier ou non, est égal ou supérieur à 0,
y, nombre entier, est égal ou supérieur à 0.

5. Système catalytique selon l'une quelconque des revendications 1 à 4 dans lequel la terre rare est un lanthanide dont le numéro atomique varie de 57 à 71, de préférence le néodyme.

6. Système catalytique selon l'une quelconque des revendications 1 à 5 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone, de préférence un méthyle.

7. Système catalytique selon l'une quelconque des revendications 1 à 6 dans lequel le métallocène est de formule (III-1), (III-2), (III-3), (III-4) ou (III-5) :
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
Flu représentant le groupe C₁₃H₈.

8. Système catalytique selon l'une quelconque des revendications 1 à 7 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.

9. Système catalytique selon l'une quelconque des revendications 1 à 8 dans lequel les atomes de carbone du noyau benzénique de R^{B} en ortho du magnésium sont substitués par un méthyle ou un éthyle, de préférence un méthyle.

10. Système catalytique selon l'une quelconque des revendications 1 à 9 dans lequel le composé diorganomagnésien est de formule (IV) 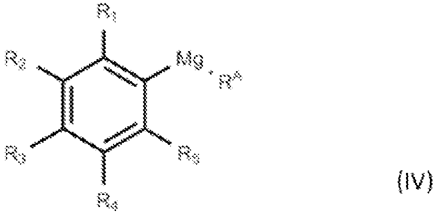
R₁ et R₅, identiques ou différents, représentent un méthyle ou un éthyle, de préférence un méthyle,
R₂, R₃ et R₄, identiques ou différents, étant un atome d'hydrogène ou alkyle,
R^{A} étant un alkyle, un cycloalkyle ou un benzyle, substitué ou non.

11. Système catalytique selon l'une quelconque des revendications 1 à 10 dans lequel R^{A} représente un alkyle ayant de 2 à 10 atomes de carbone, de préférence de 2 à 8 atomes de carbone.

12. Système catalytique selon l'une quelconque des revendications 1 à 11 dans lequel le rapport entre le nombre de mole de Mg du co-catalyseur et le nombre de mole de métal de terre rare du métallocène va de 1 à 100, de préférence de 1 à moins de 10.

13. Procédé de préparation d'un polymère qui comprend une étape de polymérisation d'un monomère M choisi dans le groupe des monomères constitués par les diènes conjugués, l'éthylène, les α-monooléfines et leurs mélanges en présence d'un système catalytique défini à l'une quelconque des revendications 1 à 12.

14. Procédé selon la revendication 13 dans lequel le monomère M est un mélange d'un 1,3-diène et d'éthylène, le 1,3-diène étant de préférence le 1,3-butadiène, l'isoprène, le myrcène, le β-farnésène ou leurs mélanges.

15. Procédé selon la revendication 14, lequel procédé comprend après l'étape de polymérisation l'ajout d'un agent de modification pour fonctionnaliser le polymère, l'agent de modification étant de préférence un alcoxysilane.

## Patentansprüche

1. Katalytisches System auf Basis von mindestens:
einem Metallocen der Formel (Ia) oder (Ib), vorzugsweise (Ia),
einer Diorganomagnesiumverbindung als Cokatalysator,
{P(C_{P}¹)(Cp²)Y} (Ia)
Cp³Cp⁴Y (Ib)
wobei Y für eine Gruppe steht, die ein Seltenerdmetallatom umfasst,
wobei Cp¹, Cp², Cp³ und Cp⁴ gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen Cp¹ und Cp² verbrückt und ein Silicium- oder Kohlenstoffatom umfasst,
wobei es sich bei der Diorganomagnesiumverbindung um eine unsymmetrische Verbindung der Formel (II) handelt:
R^{B}-Mg-R^{A} (II)
wobei R^{B} von R^{A} verschieden ist,
wobei R^{B} einen durch das Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist,
wobei R^{A} für Alkyl, Cycloalkyl oder Benzyl, das substituiert oder nicht ist, steht.

2. Katalytisches System nach Anspruch 1, wobei Cp¹ und Cp² gleich sind und aus der Gruppe bestehend aus substituierten Fluorenylgruppen und der unsubstituierten Fluorenylgruppe der Formel C₁₃H₈ ausgewählt sind und vorzugsweise jeweils für eine unsubstituierte Fluorenylgruppe der Formel C₁₃H₈ stehen.

3. Katalytisches System nach einem der Ansprüche 1 bis 2, wobei das Symbol Y für die Gruppe Met-G steht, wobei Met für ein Metallatom, bei dem es sich um ein Seltenerdmetall handelt, steht und G für eine Gruppe, die die Borhydrid-Einheit BH₄ umfasst, oder ein Halogenatom, das aus der Gruppe bestehend aus Chlor, Fluor, Brom und Iod ausgewählt ist, steht.

4. Katalytisches System nach Anspruch 3, wobei G für ein Chloratom oder die Gruppe der Formel (III) steht:
(BH₄)_{(1+y)-}L_{y}-Nₓ (III)
in der
L für ein Alkalimetall, das aus der Gruppe bestehend aus Lithium, Natrium und Kalium ausgewählt ist, steht,
N für ein Molekül eines Ethers, vorzugsweise Diethylether oder Tetrahydrofuran, steht,
x ganzzahlig oder nicht ganzzahlig ist und gleich oder größer als 0 ist,
y ganzzahlig ist und gleich oder größer als 0 ist.

5. Katalytisches System nach einem der Ansprüche 1 bis 4, wobei es sich bei dem Seltenerdmetall um ein Lanthanid mit einer Ordnungszahl von 57 bis 71, vorzugsweise Neodym, handelt.

6. Katalytisches System nach einem der Ansprüche 1 bis 5, wobei die Brücke P der Formel ZR¹R² entspricht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen.

7. Katalytisches System nach einem der Ansprüche 1 bis 6, wobei das Metallocen der Formel (III-1), (III-2), (III-3), (III-4) oder (III-5) entspricht:
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
wobei Flu für die Gruppe C₁₃H₈ steht.

8. Katalytisches System nach einem der Ansprüche 1 bis 7, wobei dann, wenn eines der 2 Kohlenstoffatome des Benzolkerns von R^{B} in ortho-Position zu dem Magnesium durch ein Isopropyl substituiert ist, das zweite Kohlenstoffatom des Benzolkerns von R^{B} in ortho-Position zu dem Magnesium nicht durch ein Isopropyl substituiert ist.

9. Katalytisches System nach einem der Ansprüche 1 bis 8, wobei die Kohlenstoffatome des Benzolkerns von R^{B} in ortho-Position zu dem Magnesium durch ein Methyl oder ein Ethyl, vorzugsweise ein Methyl, substituiert sind.

10. Katalytisches System nach einem der Ansprüche 1 bis 9, wobei die Diorganomagnesiumverbindung die Formel (IV) aufweist: 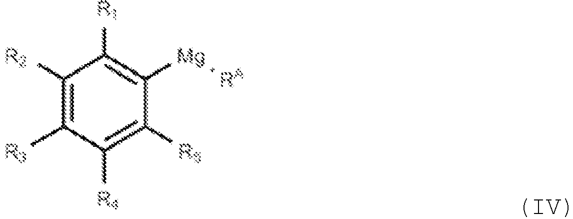
R₁ und R₅ gleich oder verschieden sind und für ein Methyl oder ein Ethyl, vorzugsweise ein Methyl, stehen,
wobei R₂, R₃ und R₄ gleich oder verschieden sind und für ein Wasserstoffatom oder Alkyl stehen,
wobei R^{A} für Alkyl, Cycloalkyl oder Benzyl, das substituiert oder nicht ist, steht.

11. Katalytisches System nach einem der Ansprüche 1 bis 10, wobei R^{A} für ein Alkyl mit 2 bis 10 Kohlenstoffatomen, vorzugsweise 2 bis 8 Kohlenstoffatomen, steht.

12. Katalytisches System nach einem der Ansprüche 1 bis 11, wobei das Verhältnis zwischen der Zahl der Mole Mg des Cokatalysators und der Zahl der Mole des Seltenerdmetalls des Metallocens 1 bis 100, vorzugsweise 1 bis weniger als 10, beträgt.

13. Verfahren zur Herstellung eines Polymers, das einen Schritt der Polymerisation eines Monomers M, das aus der Gruppe von Monomeren bestehend aus konjugierten Dienen, Ethylen, α-Monoolefinen und Mischungen davon ausgewählt wird, in Gegenwart eines in einem der Ansprüche 1 bis 12 definierten Katalysatorsystems umfasst.

14. Verfahren nach Anspruch 13, wobei es sich bei dem Monomer M um eine Mischung von einem 1,3-Dien und Ethylen handelt, wobei es sich bei dem 1,3-Dien vorzugsweise um 1,3-Butadien, Isopren, Myrcen, β-Farnesen oder eine Mischung davon handelt.

15. Verfahren nach Anspruch 14, wobei das Verfahren nach dem Polymerisationsschritt die Zugabe eines Modifizierungsmittels zur Funktionalisierung des Polymers umfasst, wobei es sich bei dem Modifizierungsmittel vorzugsweise um ein Alkoxysilan handelt.

## Claims

1. Catalytic system based at least:
- on a metallocene of formula (la) or (Ib), preferably (la),
on a diorganomagnesium compound as co-catalyst,
{P(Cp¹)(Cp²)Y} (Ia)
Cp³Cp⁴Y (Ib)
Y denoting a group including a metal atom which is a rare-earth metal,
Cp¹, Cp², Cp³ and Cp⁴, which may be identical or different, being chosen from the group consisting of fluorenyl groups, cyclopentadienyl groups and indenyl groups, the groups being substituted or unsubstituted,
P being a group bridging the two groups Cp¹ and Cp² and comprising a silicon or carbon atom,
the diorganomagnesium compound being an asymmetric compound of formula (II)
R^{B}-Mg-R^{A} (II)
R^{B} being different from R^{A},
R^{B} comprising a benzene nucleus substituted with a magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
R^{A} being an alkyl, a cycloalkyl or a benzyl that is substituted or not.

2. Catalytic system according to Claim 1, in which Cp¹ and Cp² are identical and are chosen from the group consisting of substituted fluorenyl groups and the unsubstituted fluorenyl group of formula C₁₃H₈, and each preferably represent an unsubstituted fluorenyl group of formula C₁₃H₈.

3. Catalytic system according to either of Claims 1 and 2, in which the symbol Y represents the group Met-G, with Met denoting a metal atom which is a rare-earth metal and G denoting a group comprising the borohydride BH₄ unit or denoting a halogen atom chosen from the group consisting of chlorine, fluorine, bromine and iodine.

4. Catalytic system according to Claim 3, in which G denotes a chlorine atom or the group of formula (III)
(BH₄)_{(1+y)-}L_{y}-Nₓ (III)
in which
L represents an alkali metal chosen from the group consisting of lithium, sodium and potassium,
N represents a molecule of an ether, preferably diethyl ether or tetrahydrofuran,
x, which may or may not be an integer, is greater than or equal to 0,
y, which is an integer, is greater than or equal to 0.

5. Catalytic system according to any one of Claims 1 to 4, in which the rare-earth metal is a lanthanide, the atomic number of which ranges from 57 to 71, preferably neodymium.

6. Catalytic system according to any one of Claims 1 to 5, in which the bridge P corresponds to the formula ZR¹R², Z representing a silicon or carbon atom and R¹ and R², which may be identical or different, each representing an alkyl group comprising from 1 to 20 carbon atoms, preferably a methyl.

7. Catalytic system according to any one of Claims 1 to 6, in which the metallocene is of formula (III-1), (III-2), (III-3), (III-4) or (III-5):
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (111-3)
[{Me₂SiFlu₂Nd(µ-BH₄)(THF)}₂] (III-4)
[Me₂SiFlu₂Nd(µ-BH₄)] (III-5)
Flu representing the C₁₃H₈ group.

8. Catalytic system according to any one of Claims 1 to 7, in which, if one of the two carbon atoms of the benzene nucleus of R^{B} ortho to the magnesium is substituted with an isopropyl, the second carbon atom of the benzene nucleus of R^{B} ortho to the magnesium is not substituted with an isopropyl.

9. Catalytic system according to any one of Claims 1 to 8, in which the carbon atoms of the benzene nucleus of R^{B} ortho to the magnesium are substituted with a methyl or an ethyl, preferably a methyl.

10. Catalytic system according to any one of Claims 1 to 9, in which the diorganomagnesium compound is of formula (IV) 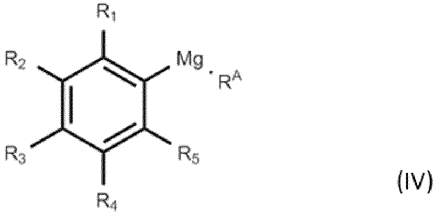
R₁ and R₅, which may be identical or different, represent a methyl or an ethyl, preferably a methyl,
R₂, R₃ and R₄, which may be identical or different, being a hydrogen atom or an alkyl,
R^{A} being an alkyl, a cycloalkyl or a benzyl that is substituted or not.

11. Catalytic system according to any one of Claims 1 to 10, in which R^{A} represents an alkyl containing from 2 to 10 carbon atoms, preferably from 2 to 8 carbon atoms.

12. Catalytic system according to any one of Claims 1 to 11, in which the ratio between the number of moles of Mg of the co-catalyst and the number of moles of rare-earth metal of the metallocene ranges from 1 to 100, preferably from 1 to less than 10.

13. Process for preparing a polymer, which comprises a step of polymerization of a monomer M chosen from the group of monomers consisting of conjugated dienes, ethylene, α-monoolefins and mixtures thereof in the presence of a catalytic system defined in any one of Claims 1 to 12.

14. Process according to Claim 13, in which the monomer M is a mixture of a 1,3-diene and of ethylene, the 1,3-diene preferably being 1,3-butadiene, isoprene, myrcene, β-farnesene or mixtures thereof.

15. Process according to Claim 14, said process comprising, after the polymerization step, the addition of a functionalizing agent to functionalize the polymer, the functionalizing agent preferably being an alkoxysilane.
